# FASCICULE DE BREVET EUROPEEN

(11) **EP 3 472 609 B1**
(45) Date de publication et mention de la délivrance du brevet: **31.07.2024**
(21) Numéro de dépôt: 17743066.7
(22) Date de dépôt: 16.06.2017
(51) Int. Cl.: G01N 30/26, B01D 15/40, G01N 30/88, G01N 30/46

(54) **PROCEDE DE CHROMATOGRAPHIE EN PHASE SUPERCRITIQUE HYBRIDE**
HYBRIDES SUPERKRITISCHES FLÜSSIGKEITSCHROMATOGRAFIE-VERFAHREN
HYBRID SUPERCRITICAL FLUID CHROMATOGRAPHY METHOD

(30) Priorité: 17.06.2016 FR 1655688
(43) Date de publication de la demande: 24.04.2019
(73) Titulaire: Pic Solution, 84140 Montfavet (FR)
(72) Inventeur: SHAIMI, Mohamed, 84800 Isle sur la Sorgue (FR)
(74) Mandataire: Novagraaf Technologies
(86) Numéro de dépôt international: PCT/FR2017/051592
(87) Numéro de publication internationale: WO 2017/216506

(56) Documents cités:
- WO-A2-2010/051005
- FR-A1- 2 882 528
- FR-A1- 2 889 665
- FR-A1- 3 021 229
- US-A1- 2013 180 404

## Description

### Domaine technique

L'invention concerne le domaine des techniques chromatographiques. Plus particulièrement, l'invention porte sur un procédé de chromatographie en phase supercritique ou liquide d'un produit P ainsi que sur l'installation pour la mise en oeuvre d'un tel procédé.

### État de la technique

L'analyse chromatographique en phase supercritique, quel que soit son champ d'application, est confrontée à des cas de plus en plus complexes. Il peut s'agir d'un cas où un grand nombre de constituants présents dans le produit P sont à détecter alors que très peu de produit P est injecté dans le circuit d'analyse. Ainsi, le résultat d'analyse indique parfois une trace d'un constituant auquel l'opérateur s'intéresse. Il est nécessaire, dans ce cas-là, d'isoler le constituant d'intérêt présent dans le produit P.

Le document FR 2882528 décrit une installation et un procédé de chromatographie en phase supercritique d'un produit P, comprenant, en continu et dans l'ordre:
- une opération de pompage d'un fluide supercritique;
- une opération d'injection d'au moins un échantillon du produit P dans au moins une colonne de chromatographie;
- une opération de détection; et
- une opération de collecte de fractions; ainsi qu'au moins un premier aiguillage en X entre une voie analytique et une voie préparative, s'effectuant préalablement à l'opération de pompage de fluide supercritique, et lesdites voies analytique et préparative incluant chacune leurs propres opérations de pompage de fluide supercritique et leurs propres opérations d'injection, et l'opération de collecte étant commune aux voies analytique et préparative.

Le document US 2013/180404 décrit un appareil et un procédé pour créer un drain actif pour un séparateur gaz-liquide haute et basse pression. L'appareil décrit dans ce document réalise un taux de drainage déterministe de fractions liquides de volume et de viscosité variables du séparateur. Le document divulgue également une méthode de drainage. Les modes de réalisation concernent principalement les domaines de la chromatographie préparative en fluide supercritique (SFC) et de l'extraction en fluide supercritique (SFE). Un flux continu de liquide récupéré est fourni à un collecteur de fractions robotisé.

Un mode de réalisation permet la conversion de systèmes HPLC typiques en systèmes de chromatographie fluide supercritique (SFC).

Pour répondre à ce besoin, divers méthodologies d'analyse chromatographique ont été mises en place. L'analyse du produit P est notamment réalisée par une succession d'étapes de chromatographie analytique et préparative alternées. À titre d'exemple, les conditions de séparation sont mises au point dans un premier temps avec une étape analytique. Dans un second temps, ces conditions opéaratoires sont appliquées à l'étape préparative où les constituants du produit P sont ainsi séparés et isolés. Dans un troisième temps, les constituants séparées du produit P sont analysé par une étape analytique pour vérifier la pureté des constituants isolés.

On entend par étape une succession d'opérations ou d'actions suite à laquelle un objectif d'analyse est atteint.

En effet, l'objectif d'analyse d'une étape analytique est d'identifier quantitativement et/ou qualitativement des constituants présents dans le produit P alors que l'objectif d'analyse d'une étape préparative est de collecter séparément plusieurs constituants du produit P. De cette manière, chaque constituant présent dans le produit P est quantifié.

Cependant, une telle succession d'étapes analytiques et préparatives est difficile à mettre en place. Actuellement, chaque étape analytique ou préparative est mise en oeuvre par une installation spécialisée. Pour réaliser, par exemple, une étape préparative suivie d'une étape analytique, l'opérateur doit changer l'installation chromatographique entre lesdites étapes. Dans certains cas, une mauvaise séparation des constituants pendant l'étape préparative engendre une analyse insatisfaisante pendant l'étape analytique. L'opérateur doit alors refaire l'étape préparative en changeant d'installation chromatographique avant de re-passer à l'étape analytique. Le passage d'un sysyème analytique à un système préparatif différent demande du temps, et ne peut se faire sans intervention humaine.

Dans ce contexte, l'invention a pour but de proposer un procédé de chromatographie en phase supercritique ou liquide permettant une réalisation successive d'au moins une étape analytique et d'au moins une étape préparative en une installation unique afin de trouver les meilleurs conditions de séparation du produit P, de séparer les différents constituants du produit P, et de les analyser pour en valider la pureté. En outre, le procédé selon l'invention garantit un résultat d'analyse précis, même pour les constituants de faible concentration dans le produit P.

### Description de l'invention

Avec ces objectifs en vue, il est proposé, selon l'invention, un procédé de chromatographie en phase supercritique ou liquide d'un produit P comprenant en continu et dans l'ordre :
- une étape analytique selon une voie analytique comprenant :
   - une opération de premier pompage d'un fluide supercritique ou liquide et de deuxième pompage d'un modificateur,
   - une opération d'injection d'au moins un échantillon du produit P ou d'au moins un constituant du produit P dans au moins une colonne de chromatographie, le produit P ou le constituant du produit P étant élué dans la colonne par le fluide supercritique ou liquide et le modificateur,
   - une opération de séparation dans la colonne des constituants du produit P,
   - une opération de détection de la composition du produit P ou des constituants du produit P,
- une étape d'aiguillage comprenant
   - une opération de vérification comportant une sous-étape de comparaison des résultats d'analyse entre eux ou avec des valeurs référentielles représentant des conditions d'analyse optimales, et
   - une opération de changement de voie automatique entre la voie analytique et une voie préparative en fonction de la comparaison précédente,
- en cas de voie préparative choisie à l'étape d'aiguillage, une étape préparative selon la voie préparative comprenant
   - une opération de premier pompage d'un fluide supercritique ou liquide et de deuxième pompage d'un modificateur,
   - une opération d'injection d'au moins un échantillon du produit P dans au moins une colonne de chromatographie, le produit P étant élué dans la colonne par le fluide supercritique ou liquide et le modificateur,
   - une opération de séparation dans la colonne des constituant du produit P,
   - une opération de détection des constituants du produit P,
   - une opération de collecte des constituants du produit P, en lit ouvert, à pression atmosphérique,
   - une opération de recyclage du fluide supercritique, ledit fluide étant isolé de l'environement extérieur, par une vanne commutée, une fois que l'opération de collecte de l'étape préparative est terminée.

L'invention présente donc l'avantage de fournir un procédé de chromatographie réalisant au moins une étape analytique et une étape préparative en une seule installation. Grâce au procédé selon l'invention, l'étape analytique et l'étape préparative sont réalisées de manière automatique dans les meilleures conditions d'analyse. L'opérateur n'a donc plus besoin de changer d'installation entre ces étapes d'analyse, ce qui lui permet un gain de temps, d'espace et d'investissement, dans la mesure ou un seul système est nécessaire au lieu de deux systèmes séparés.

Lors du pompage de modificateur dans l'étape analytique, il est possible d'introduire des modificateurs différents pour chacune des colonnes chromatographiques. Après avoir été injecté dans chaque colonne, le produit P se trouve ainsi dans de différentes conditions d'analyse. Dans ce cas de figure, l'opération de vérification avant l'étape d'aiguillage consiste à comparer les résultats d'analyse des colonnes chromatographiques entre-elles ou à comparer les résultats de chaque colonne aux valeurs référentielles pour déterminer quel couple colonne/modificateur représente la meilleure condition d'analyse. Ainsi, à la prochaine étape préparative, cette condition d'analyse s'applique pour donner le résultat optimal au procédé en général.

Dans un autre exemple, il est possible d'utiliser un seul modificateur. Dans ce cas, l'opération de vérification consiste à comparer le résultat d'analyse avec des valeurs référentielles qui représentent les conditions d'analyse optimales. Si le résultat correspond aux valeurs référentielles, le changement vers la voie préparative est réalisé.

Ainsi, l'étape d'aiguillage permet d'assurer que la condition d'analyse optimale soit appliquée dans l'étape préparative suivante. En d'autres termes, elle permet de choisir la voie préparative après que la meilleure condition d'analyse est déterminée ou que la condition d'analyse répond à des critères référentiels prédéfinis.

Il est à noter qu'après la première étape analytique, les différents constituants du produit P sont identifiés. Puis, grâce à l'étape préparative, les constituants collectés sont à la disposition de l'opérateur pour une éventuelle analyse approfondie du constituant qui l'intéresse.

Selon un mode de réalisation avantageux de l'invention, le procédé comprend en continu et dans l'ordre :
- une première étape analytique,
- une première étape d'aiguillage,
- une étape préparative,
- une deuxième étape d'aiguillage, et
- une deuxième étape analytique comportant les mêmes opérations que la première étape analytique.

Ainsi, la deuxième étape d'aiguillage permet d'accéder à une deuxième étape analytique pendant laquelle les constituants préalablement séparés et collectés sont analysés d'une manière automatique qualitativement et quantitativement un par un. Cette deuxième étape analytique permet donc de vérifier la pureté de chaque constituant collecté.

Ainsi lors de la séparation d'un mélange contenant un produit P,
- on a une première étape analytique pour metrre au point les conditions de séparation ;
- un passage automatique à l'étape préparative pour la séparation du produit P, et
- un passage automatique à une deuxième étape analytique pour analyser la fraction du produit P collecté à l'étape préparative.

Selon un mode de réalisation de l'invention, la deuxième étape d'aiguillage comprend :
- une opération de changement de voie automatique entre la voie préparative et la voie analytique
- une opération à l'étape analytique de contrôle de la pureté des fractions du produit P à lors de l'étape préparative

L'étape analytique ou préparative comprend une opération de recyclage du fluide supercritique, une fois que l'opération de collecte de l'étape préparative est terminée. En d'autres termes, à l'étape préparative, l'opération de recyclage se déroule à chaque fois que le produit P n'est pas en train d'être collecté à pression atmosphérique par l'intermédiaire d'un robot collecteur.

Ainsi, le fluide supercritique recyclé est introduit de nouveau dans le circuit pour être condensé, puis pompé et mélangé de nouveau au modificateur pour une nouvelle utilisation. Il permet alors de réduire le coût de mis en oeuvre du procédé.

Selon un autre mode de réalisation de l'invention, l'étape analytique comprend une opération de recyclage faisant suite à l'opération de détection de l'étape analytique. L'étape de recyclage permet ainsi de récupérer le fluide supercritique pour une nouvelle utilisation.

Selon un mode de réalisation de l'invention, l'étape analytique et l'étape préparative comprennent chacune
- une première opération de nettoyage d'un circuit d'injection et de collecte en amont de l'opération de premier pompage et de deuxième pompage, et
- une deuxième opération de nettoyage du circuit d'injection et de collecte en aval de l'opération de collecte de l'étape préparative ou à l'opération de détection de l'étape analytique, la deuxième opération de nettoyage étant la dernière opération de l'étape analytique et de l'étape préparative.

De cette manière, il n'y a pas de risque de contamination des différents constituants du produit P dans le circuit d'injection, dans le circuit de collecte et/ou dans les tubes à essai contenant ces éléments. Cela assure donc une bonne condition d'analyse du produit P.

Selon un autre mode de réalisation de l'invention, l'opération de détection se fait par spectrophotométrie dans l'ultraviolet visible et/ou par spectrométrie de masse, et/ou tout autre détecteur permettant la détection de composés chimiques.

Un autre objet de l'invention est une installation pour la chromatographie en phase supercritique d'un produit P agencé de sorte à mettre en oeuvre les procédés analytiques et préparatifs selon l'invention. L'installation comprend une voie analytique et une voie préparative montées en parallèle comprenant chacune :
- une première pompe de fluide supercritique ou liquide,
- une deuxième pompe de modificateur,
- un système d'analyse comprenant au moins une colonne chromatographique,
- un système d'injection d'au moins un échantillon du produit P ou des constituants séparés du produit P dans les colonnes du système d'analyse, le système d'injection étant disposé entre la première pompe du fluide supercritique ou liquide et le système d'analyse,
l'installation comprenant un système de collecte à lit ouvert, à pression atmosphérique de fractions du produit P et du fluide supercritique à recycler; et au moins un système de détection, l'installation comprenant aussi
- une première vanne d'aiguillage disposée en amont du système d'injection, qui est positionnée de sorte à permettre une injection du produit P ou des constituants du produit P dans la voie analytique ou dans la voie préparative,
- une deuxième vanne d'aiguillage disposée en amont des pompes de fluide supercritique ou liquide, qui est actionnée de façon à laisser circuler le fluide supercritique ou liquide dans la voie analytique ou dans la voie préparative au moyen d'un dispositif de prélèvement,
- un dispositif de contrôle informatique,

la première vanne d'aiguillage et la deuxième vanne d'aiguillage étant activées au même moment par le dispositif de contrôle informatique de manière à diriger respectivement le produit P ou les constituants du produit P et le fluide supercritique ou liquide dans la voie issue de la l'étape d'aiguillage, le système de collecte étant relié d'une part à un système de recyclage et
d'autre part au dispositif de prélèvement, ledit système de collecte comprennent des vannes C1, C2 permettant d'envoyer le fluide supercritique, isolé de l'environnement extérieur, au système de recyclage une fois que l'opération de collecte de l'étape préparative est terminée.

Le dispositif de contrôle informatique commande la position de chacune des première et deuxième vannes en fonction du résultat de l'analyse, par exemple à l'issue d'une première étape analytique. Ainsi, l'installation selon l'invention permet de passer d'une étape analytique à une étape préparative ou vice versa de manière automatique tout en assurant la qualité de l'analyse optimale du produit P ou des constituants du produit P.

Selon un mode de réalisation de l'invention, l'installation comprend un ensemble de plateaux comportant des récipients et un dispositif de prélèvement comprenant plusieurs bras automatisés qui sont configurés de manière à collecter ou déposer du produit P ou des fractions du produit P disposés dans l'ensemble de plateaux. Ainsi, la collecte des échantillons disposés dans les plateaux est complètement automatisée grâce au dispositif de prélèvement.

Avantageusement mais facultativement, l'ensemble de plateaux est constitué d'un premier plateau réservé pour les échantillons du produit P brut et d'un deuxième plateau réservé pour les constituants séparés et colléctés du produit P. Une telle organisation des plateaux permet à l'opérateur d'accéder soit au produit P soit aux constituants sans avoir besoin d'identifier le contenu dans les tubes à essai.

Selon un autre mode de réalisation de l'invention, le système de recyclage de fluide supercritique est installé en aval du système de collecte.

Selon un mode de réalisation de l'invention, le système de collecte est relié d'une part à un système de recyclage et d'autre part à un dispositif de prélèvement. Ce système de collecte est agencé de manière à ce que le fluide supercritique est envoyé au système de recyclage une fois que les fractions du produit P sont envoyés au dispositif de prélèvement.

De cette manière, le recyclage du fluide supercritique peut être réalisé dans une installation utilisant un système de collecte à lit ouvert (« open bed » en anglais). En effet, lorsque ce système de collecte est en fonctionnement, le fluide est à pression atmosphérique, ce qui complique l'opération de recyclage. Le fluide est dirigé vers le dispositif de recyclage, et cela à tout moment lorque le produit P n'est pas dirigé et collecter à pression atmosphérique par le robot collecteur.

Ainsi, le fluide supercritique à recycler n'étant pas à pression atmosphérique, est donc plus en contact avec l'extérieur, ce qui permet un recyclage simple et efficace du fluide supercritique pour une nouvelle utilisation.

Selon un autre mode de réalisation de l'invention, un régulateur de débit est installée après le moyen d'aiguillage. Le régulateur de débit permet de contrôler le flux allant vers le ou les systèmes de détection.

Selon un mode de réalisation de l'invention, le système de détection est composé de deux systèmes de détection montés en parallèle, le premier système étant un spectrophotomètre dans l'ultraviolet visible et le deuxième système étant un spectromètre de masse.,. Ainsi, à la fin du procédé, l'opérateur reçoit deux types de résultat d'analyse, ce qui lui permet de choisir quel type de détection est le plus approprié à la nature du produit P.

D'autres caractéristiques et avantages pourront encore apparaître à l'homme du métier à la lecture des exemples ci-dessous, illustrés par les figures annexées, donnés à titre illustratif et nullement limitatif.

### Brève description des figures

- La figure 1 représente schématiquement un mode de réalisation de l'installation selon l'invention ;
- La figure 2 représente schématiquement un ensemble de plateaux à tubes à essai et un dispositif de collecte comprenant plusieurs bras automatisés de l'installation de la figure 1 ;
- Les figures 3A, 3B et 3C représentent schématiquement des étapes de fonctionnement d'un système de collecte de fractions de l'installation de la figure 1 ;
- La figure 4 représente schématiquement un mode de réalisation du procédé selon l'invention ;
- La figure 5 représente schématiquement deux étapes d'analyse analytiques faisant partie du procédé de la figure 4 ;
- La figure 6 représente schématiquement deux étapes d'aiguillage faisant partie du procédé de la figure 4 ;
- La figure 7 représente schématiquement une étape préparative du procédé de la figure 4.

### Remarques préliminaires

De manière générale, un éluant constitue la phase mobile en chromatographie. Dans le cas de la chromatographie en phase supercritique, l'éluant est un fluide à l'état dit « supercritique » (SC). Par définition, un fluide supercritique a une densité proche de celle d'un liquide et une viscosité et une diffusivité proche de celles d'un gaz. Dans la pratique, le dioxyde carbone (CO₂) est le fluide supercritique le plus utilisé.

De plus, il est entendu par modificateur tout co-solvant organique ajouté pour modifier la polarité de l'éluant afin de favoriser la solubilité du constituant à analyser. Les modificateurs peuvent être le méthanol, l'éthanol, l'isopropanol, acétonitrile ou tout autre solvant organique ou mélange de solvants organiques.

### Description détaillée

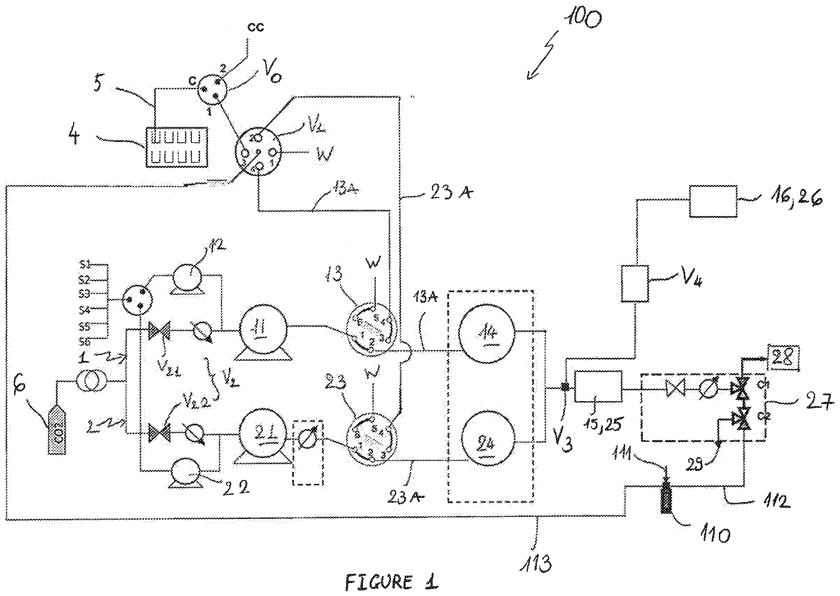

La figure 1 illustre un exemple de réalisation d'une installation 100 selon l'invention. L'installation 100 comprend une voie analytique 1 et une voie préparative 2 montées en parallèle. Chaque voie comprend des éléments permettant la mise en oeuvre une étape analytique ou une étape préparative selon sa destination.

Les voies analytique 1 et préparative 2 ont en commun un ensemble de plateaux 4, un dispositif de prélèvement 5 et un réservoir de fluide supercritique 6.

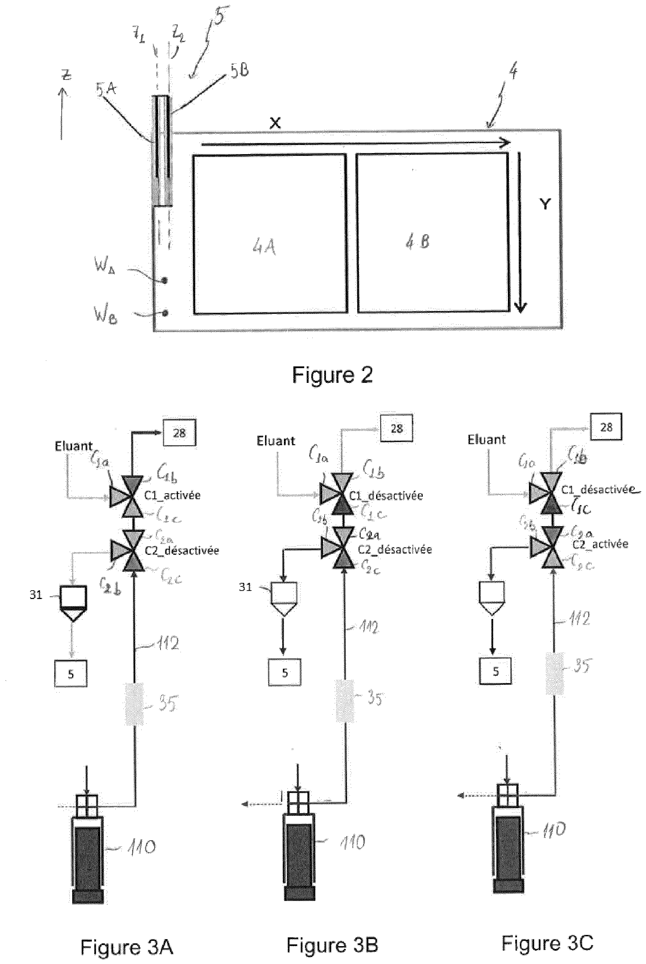

Avant d'être injectés dans la voie préparative ou analytique, un ou plusieurs échantillons du produit P sont disposés dans des tubes à essai rangés dans l'ensemble de plateaux 4 illustré en détail à la figure 2. L'ensemble de plateaux 4 est constitué de deux sous-ensemble de plateaux : un ou plusieurs plateaux d'échantillon 4A réservé pour les échantillons du produit P, et un plateau ou plusieurs plateaux de collecte 4B réservé pour les fractions des constituants du produit P.

Un dispositif de prélèvement 5 automatisé procède à une ponction du produit P dans le plateau d'échantillon 4A ou des constituants dans le plateau de collecte 4B. Le dispositif de prélèvement comprend deux bras automatisés 5A et 5B montés mobiles en translation selon un axe vertical Z. En outre, les bras automatisés 5A et 5B se déplacent dans un plan horizontal passant par deux axes horizontaux X et Y du plateau 4, ci-après appelé plan XY. Le produit P ou constituant du produit P est prélevé par aspiration par le bras automatisé 5A dans les tubes à essai disposés sur les plateaux 4A ou 4B. La collecte des fractions contenant les constituant purs du produit P se fait à l'aide du bras automatisé 5B.

A l'aide d'une première vanne d'aiguillage V₁, le produit P ou ses constituants sont dirigés soit vers un système d'injection analytique 13 dans au moins une colonne chromatographique analytique 14 pour la voie analytique 1, soit vers un système d'injection préparatif 23 dans au moins une colonne chromatographique préparative 24 pour la voie préparative 2. Dans les paragraphes suivants, la colonne chromatographique analytique 14 sera appelée colonne analytique 14. De même, la colonne chromatographique préparative 24 sera appelée colonne préparative 24

Les systèmes d'injection analytique 13 et préparatif 23 sont situés respectivement dans les circuits d'injection analytique 13A et préparatif 23A.

Dans un exemple de réalisation, la voie analytique 1 comprend neuf colonnes analytiques 14. La voie préparative 2 comprend six colonnes préparatives 24.D'autre part, dans cet exemple de réalisation, le système d'injection analytique 13 est adapté pour fonctionner avec des colonnes analytiques 14 de diamètre interne compris entre 2.1 mm et 1 cm. De même, le système d'injection préparatif 23 est adapté pour fonctionner avec des colonnes préparatives 24 dont le diamètre interne est supérieur à 1 cm.

Selon l'invention, un réservoir 6 de fluide supercritique, en l'occurrence ici du dioxyde de carbone (CO₂), se trouve en amont d'une deuxième vanne d'aiguillage V2. Le réservoir 6 et la deuxième vanne d'aiguillage V2 sont placés en amont des systèmes d'injection 13 et 23. Dans cet exemple, la deuxième vanne d'aiguillage V2 comprend deux vannes à deux voies V21 et V22 disposées sur la voie analytique 1 et sur la voie préparative 2 respectivement. Dans un autre exemple de réalisation, la deuxième vanne d'aiguillage V2 est une vanne à trois voies.

La deuxième vanne d'aiguillage V₂ a pour but de diriger le flux de CO₂ vers la voie analytique 1 ou la voie préparative 2, selon le choix de l'opérateur. Une fois que le flux CO₂ est dans la voie choisie, il est condensé, pompé et préssurisé afin d'atteindre son état supercritique. Le pompage du flux CO₂ est réalisé par la première pompe analytique 11 ou par la première pompe préparative 21 selon la voie choisie.

La première pompe analytique 11 peut délivrer un débit maximum de 20 mL/min, par exemple. En mode préparatif, la première pompe préparative 21 peut délivrer un débit plus élevé, pouvant aller jusqu'à 200 mL/min, par exemple.

Selon l'invention, des modificateurs sont ajoutés dans la voie analytique 1 ou dans la voie préparative 2 par des deuxièmes pompes 12 et 22 respectivement. Dans l'exemple illustré, la deuxième pompe 12 (resp. 22) de modificateurs est placée en amont de la première pompe 11 (resp. 21) du fluide supercritique. Dans un autre exemple de réalisation, la deuxième pompe 12 (resp. 22) de modificateurs se situe en aval de la première pompe 11 (resp. 21) du fluide supercritique.

Selon l'invention, l'installation 100 comprend également un système de détection 15, 16, 25 et 26 placé en aval des colonnes chromatographiques 14 et 24. Dans l'exemple ici illustré, chaque voie comprend deux systèmes de détection de nature différente : un spectrophotomètre à rayons UV-visible 15 ou 25 et un spectromètre de masse 16 ou 26. Les deux systèmes de détection 15, 16 et 25, 26 sont montés en parallèle l'un par rapport à l'autre.

Dans un autre mode de réalisation, le ou les systèmes de détection peuvent être un autre type de détecteur permettant la détection de composés chimique. A titre d'exemple, le détecteur peut être un détecteur évaporatif à diffusion de lumière.

Un moyen d'aiguillage V3 est située en amont des systèmes de détection au point de convergence des voies analytique 1 et préparative 2 afin de diriger une partie de l'éluant contenant le produit P ou ses constituants et issu des colonnes de chromatographie 14 ou 24 vers le ou les système(s) de détection optimaux correspondant au mode d'analyse. Le moyen d'aiguillage est par exemple un répartiteur, ou encore appelé un by-pass V3.

Dans l'exemple illustré, le by-pass V3 est suivi d'un régulateur de débit V4. Celui-ci est agencé de sorte à réguler et envoyer une partie du flux d'éluant vers le premier système de détection 15 ou 25 et l'autre partie du flux vers le deuxième système de détection 16 ou 26 de manière concomittante. A titre d'exemple, le régulateur de débit V4 comprend deux circuits de by-pass, chacun étant constitué des tubes avec des diamètres internes et des longueurs en adéquation avec la concentration en échantillon allant vers un système de détection spécifique, permettant de provoquer des pertes de charges prédéterminées.

Dans un mode de fonctionnement, le régulateur de débit V4 ne laissant passer aucun flux, le flux d'éluant est entièrement envoyé vers le système de détection 15, 25.

Dans un autre exemple de réalisation, le régulateur de débit V4 et le moyen d'aiguillage V3 ne sont pas présents dans l'installation. Ainsi, le flux d'éluant est entièrement dirigé vers un seul système de détection pour être analysé, ce qui est suffisant pour certaines analyses..

Selon l'invention, en aval des systèmes de détection 15 ,25, l'installation 100 comporte un système de collecte 27 suivi par un système de recyclage 28 de fluide supercritique CO₂.

Ainsi après la phase de détection, les fractions des constituants du produit P peuvent être collectées et déposées dans le plateau de collecte 4B, via une conduite 29 qui est connectée au dispositif de prélèvement 5 au niveau du bras automatisé 5B qui permet alors de déposer les fractions sur les plateaux de collecte 4B, et ce, après un passage dans un séparateur gaz-liquide, ou dirigés par une vanne C1 vers le système de recyclage 28 permettant le recyclage du fluide supercritique CO₂ qui est récupéré et réintroduit dans le circuit avant la deuxième vanne d'aiguillage V₂.

D'autre part, l'installation 100 comporte des moyens de nettoyage 110,111,112,113,W,WA,WB permettant le nettoyage des différentes voies de l'installation. Ces moyens comportent une amenée 111 d'un solvant de nettoyage vers une pompe seryngue 110. Cette pompe seringue 110 peut renvoyer vers le système de collecte 27 , le solvant de nettoyage via une conduite 112 et une vanne de nettoyage C2. Cette pompe seringue peut renvoyer vers les voies analytique 1, préparative 2, le dispositif de prélèvement 5 et de l'ensemble des plateaux 4, via la première vanne V1. Pour réaliser le nettoyage des voies analytique 1 et préparative 2, les systèmes d'injection 13 et 23 comprennent une sortie d'évacuation W. De même , la première vanne V1 comprend une sortie d'évacuation W. Enfin, l'ensemble de plateaux 4 comporte une sortie d'évacuation d'échantillonage WA associée au bras automatisé 5A et aux plateaux d'échantillon 4A et une sortie d'évacuation de collecte WB associée au bras automatisé 5B et aux plateaux de collecte 4B.

Les figures 3A, 3B et 3C illustrent des étapes de fonctionnement un exemple du système de collecte 27.

Le système de collecte 27 comprend une première vanne à trois voies C1 comprenant :
- une première voie C1a recevant l'éluant venant du système d'analyse, par exemple celui de la voie préparative. Ici, l'éluant contient une fraction du produit P, le fluide supercritique et le modificateur ;
- une deuxième voie C1b reliée au système de recyclage 28 ; et
- une troisième voie C1c reliée à une deuxième vanne à trois voies C2.

La première vanne C1 présente une position désactivée dans laquelle la première voie C1a communique avec la deuxième voie C1b. Dans cette position activée, l'éluant est dirigé vers le système de recyclage 28. La première vanne C1 en position désactivée est illustrée à la figure 3B ou 3C.

La première vanne présente une position activée dans laquelle la première voie C1a communique avec la troisième voie C1c. Ainsi, dans cette position, l'éluant est dirigé vers la deuxième vanne C2.

La première vanne C1 est suivie d'une deuxième vanne à trois voies C2. Comme la première vanne, la deuxième C2 comprend troies voies dont :
- une première voie C2a reliée à la première vanne C1 ;
- une deuxième voie C2b reliée à un séparateur gaz-liquide 31 et puis au dispositif de prélèvement 5 ;
- une troisième voie reliée à la pompe seringue 110 via le conduit 112.

Un clapet anti-retour 35 est mis sur le conduit 112 afin d'empêcher l'éluant d'aller vers la pompe serinque 110 en cas de fuite.

La deuxième vanne C2 présente également deux positions : une position activée et une position désactivée.

Dans la position désactivée, illustrée à la figure 3A et 3B, la première voie C2a communique avec la deuxième voie C2b. Ainsi, l'éluant venant de la première vanne C1 est dirigé vers le séparateur gaz-liquide 31 permettant de séparer le CO2 gazeux du liquide contenant le constituant purifié du produit P. Les constituants épurés du produit P sont ensuite envoyés vers le dispositif de prélèvement 5 après séparation du CO2 gazeux dans le séparateur.

Dans la position activée, la deuxième voie C2b communique avec la troisième voie C2c. Cela permet de faire circuler du solvant frais dans les conduits du système de collecteur 27 ainsi que du dispositif de prélèvement 5. Ces conduits sont donc nettoyés pour éviter une contamination du produit P dans une prochaine collecte.

Nous allons maintenant décrire les étapes de fonctionnement du système de collecte lors de la récupération d'un éluant venant du système de détection. Celui-ci détecte de la présence du produit P dans l'éluant. Suite à cette détection, l'installation donne l'ordre au système de collecte 27 de commencer la première étape illustrée à la figure 3A.

Pendant cette première étape, la première vanne C1 est activée tandis que la deuxième vanne C2 est désactivée. Par conséquent, l'éluant passe directement de la première vanne C1 à la deuxième vanne C2 pour être ensuite dirigé vers le séparateur 31. Les constituants épurés du produit P sont ensuite dirigés vers le dispositif de prélèvement 5, plus précisément vers un des bras automatisés 5A ou 5B.

Dans l'exemple illustré, la collecte est réalisée après une étape préparative. Pour cette raison, les constituants épurés du produit P sont envoyées dans le bras 5B qui les déposent dans un des tubes du plateau de collecte 4B.

Lorsque le système de détection ne repère plus le produit P dans l'éluant, il envoie un signal pour que le système de collecte 27 passe à une deuxième étape illustrée à la figure 3B. Pendant cette deuxième étape, Les première et deuxième vannes C1 et C2 sont désactivées. En conséquence, l'éluant ne contenant pas de produit P est envoyé vers le système de recyclage 28. La vanne C1, telle que positionnée, isole le fluide supercritique contenu dans l'éluant de l'environnement extérieur. Cela permet d'augmenter la pression du fluide supercritique, par exemple à 50 bars, en vue de son recyclage.

Puis, le système de collecte 27 passe à une troisième étape telle que réprésentée à la figure 3C. Dans cette étape, la deuxième C2 est commutée vers la position activée. En parallèle, la pompe seringue 110 est actionnée pour introduire du solvant frais et nettoyer les conduits du système de collecte 27 et du dispositif de prélèvement 5.

Dans un mode de réalisation de l'invention, l'étape de nettoyage comprend deux sous-étapes. Une première sous-étape de nettoyage consiste à récupérer les résidus du produit P restant dans les conduits et à les envoyer au dispositif de prélèvement 5. Une deuxième sous-étape est un nettoyage simple, le solvant frais issu de ce nettoyage est envoyé dans un bac à déchet. Ainsi, après la troisième étape, le système de collecte 27 est de nouveau prêt pour une autre séparation chromatographique

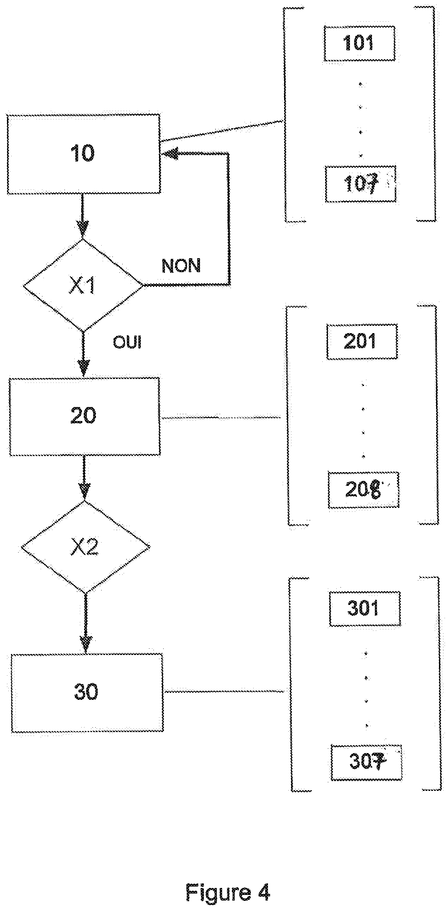

En référence aux figures 4 à 7 , nous allons maintenant décrire en détail un procédé de chromatographie selon l'invention. Ce procédé est mis en oeuvre dans et par l'installation 100 qui vient d'être décrite précédemment.

Le procédé de chromatographie selon l'invention comprend en continu et dans l'ordre une première étape analytique 10, une première étape d'aiguillage X1 et une étape préparative 20.

En variante de réalisation illustrée à la figure 4, le procédé comprend, après l'étape préparative 20, une deuxième étape d'aiguillage X2 et une deuxième étape analytique 30.

Lors d'une étape préliminaire (non illustrée), les échantillons du produit P sont placés dans le plateau d'échantillon 4A. En pratique, illustré à la figure 1, cette étape est assurée par une vanne V0 de l'installation 100 qui dirige le produit P issu d'un processus chimique CC vers les plateaux d'échantillon 4A. Après avoir défini quelques paramètres liés aux conditions d'analyse, notamment la pression, la température et le débit d'éluant, l'opérateur démarre le procédé de chromatographie selon l'invention.

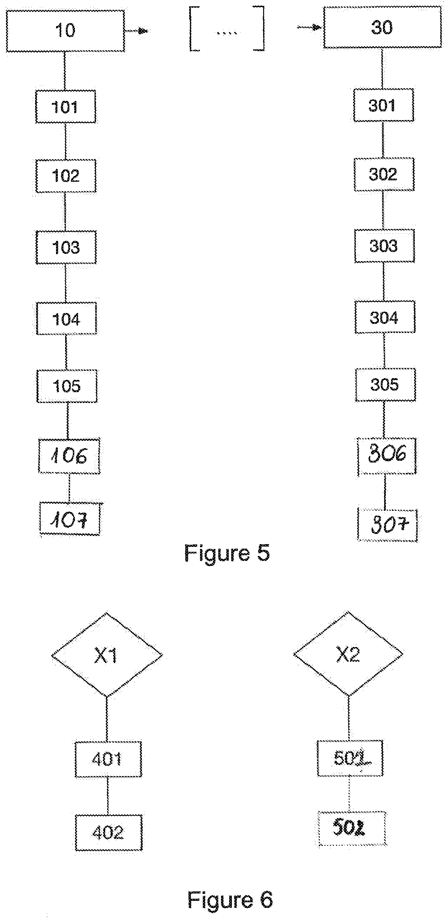

Selon l'invention, le procédé commence par une première étape analytique 10 illustrée en figures 4 et 5.

Pendant la première étape analytique 10, le premier bras automatisé 5A descend vers le plateau d'échantillon 4A dans le plan XY et selon son axe de déplacement Z1 afin de prélever une quantité de produit P. La vanne V0 est basculée afin de connecté le dispositif de prélèvement 5, et en particulier le premier bras automatisé 5A à la première vanne d'aiguillage V1 qui est, elle-même, basculée sur la voie analytique 1.

La deuxième vanne d'aiguillage V2 est basculée sur la voie analytique 1. Le flux CO₂ est alors dirigé depuis le réservoir 6 et/ou depuis le système de recyclage 28 vers la voie analytique 1. Il est ensuite condensé et pressurisé pour atteindre un état supercritique. Puis une opération 102 de premier pompage du fluide supercritique et de deuxième pompage d'au moins un modificateur S1-S6 est réalisée.

Ensuite, une opération d'injection 103 est réalisée et consiste à injecter le produit P, une fois prélevé par le premier bras 5A, vers le système d'injection analytique 13 afin de les introduire dans au moins une colonne chromatographique 14. En sortie du système d'injection analytique 13, le produit P se trouve alors mélangé avec le fluide supercritique CO₂ et le modificateur. Le mélange est alors introduit dans au moins une des colonnes analytiques 14 où le produit P est séparé au fur et à mesure de son élution dans la colonne analytique 14 au cours d'une opération de séparation 104.

Dans un exemple de réalisation, différents modificateurs S1-S6 sont introduits chacun dans une colonne analytique 14. Par exemple, de l'éthanol dans une première colonne, du méthanol dans une deuxième colonne, de l'isopranol dans une troisième colonne et ainsi de suite. Le nombre de modificateurs introduits dans chaque colonne 14 est décidé par l'opérateur. Ainsi le produit P, injecté dans chacune des colonnes, se trouve dans des conditions d'analyse différentes.

Ensuite, une opération de détection 105 de la composition du produit P est effectuée par les systèmes de détection 15 et 16. Dans cet exemple, un by-pass V3 entre l'opération de séparation 103 et l'opération de détection 104. Après cet opération de by-pass réalisée par le moyenV3 et le régulateur de débit V4, une séparation du flux en une partie du flux d'éluant vers le premier système de détection 15 et l'autre partie vers le deuxième système de détection 16 de sorte que les deux système de détection 15,16 réalisent même temps la détection de la composition du produit P. La quantité de flux allant vers le deuxième système de détection 16 est contrôllée par les diamètres internes et logueurs des tubes disposés sur les deux voies du régulateur de débit V4.

Dans l'exemple illustré, la première étape analytique 10 comprend en outre une opération de recyclage 106 du fluide supercritique CO2 alors à l'état gazeux à la suite de l'opération de détection 105.

Le fluide supercritique est alors à l'état gazeux et il peut être mélangé à une quantité résiduelle de modificateurs.

Dans un exemple de réalisation, la première étape analytique 10 comprend également, en amont de l'opération 102 de premier pompage et de deuxième pompage, une première opération de nettoyage 101 qui consiste à nettoyer le circuit d'injection 13A et le bras de prélèvement 5A. De plus, une deuxième opération de nettoyage 107 a lieu après l'opération de détection 105. Dans l'exemple illustré, la deuxième opération de nettoyage 107 est réalisée après l'opération de recyclage 106 et elle la dernière opération de la première étape analytique 10.

Une première étape d'aiguillage X1 est réalisée après la première étape analytique 10.

Pendant la première étape d'aiguillage X1 des figures 4 et 6, une opération de changement de voie 402 consiste à basculer les vannes d'aiguillage V1 et V2 vers la voie préparative 2.

Selon un exemple de réalisation, la première étape d'aiguillage X1 comprend en tout premier lieu une opération de vérification 401.

Dans un premier temps, l'opération de vérification 401 compare des résultats d'analyses issus de l'opération de détection 103 précédemment décrite ci-dessus. Dans un deuxième temps, en fonction du résultat de comparaison, l'opération de changement de voie 402 est réalisée ou non.

Dans l'exemple où différents modificateurs S1 - S6 sont ajoutés chacun dans une colonne analytique 14, l'opération de vérification 401 compare le résultat d'analyse des colonnes analytiques 14 entre elles afin de déterminer la colonne ayant le pouvoir de séparation optimal, d'où des conditions d'analyse optimales. Ainsi, le modificateur S1,..,S6 apportant les meilleures conditions sera utilisé dans la suite du procédé pour le produit P et ses composants.

Dans un autre exemple de réalisation avec un seul modificateur S1,..,S6, l'opération de vérification 401 compare simplement les résultats d'analyse avec des valeurs référentielles qui représentent les conditions analytiques optimales. Si la comparaison s'avère satisfaisante, c'est-à-dire que les résultats d'analyse correspondent aux valeurs référentielles, l'opération de changement de voie 402 est effectuée. Dans le cas contraire, le procédé revient à la première étape analytique 10.

Dans le cas où la voie préparative 2 est choisie à l'étape d'aiguillage X1, une étape préparative 20 est ensuite réalisée.

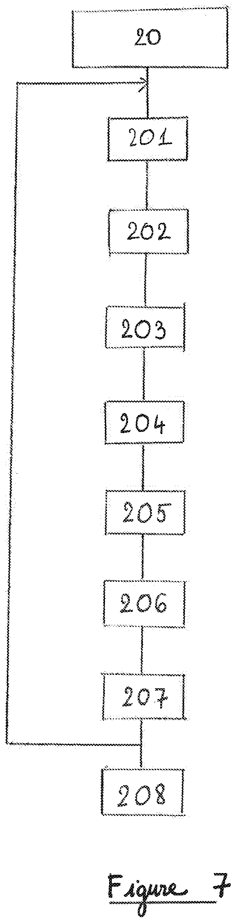

Pendant l'étape préparative 20, illustrée dans les figures 1 et 7, le premier bras automatisé 5A descend vers le plateau d'échantillon 4A pour prélever une quantité définie de produit P. Cette fois-ci, la quantité du produit prélevé est supérieure à celle qui a été prélevée lors de la première étape analytique 10 précédemment décrite.

Ensuite, les opérations, semblables à celles de la première étape analytique 10, sont réalisées comme suit:
- une opération 202 de premier pompage du flux de CO₂ pressurisé et condensé et de deuxième pompage d'un modificateur,
- une opération d'injection 203 du produit P dans au moins une colonne de chromatographie préparative 24,
- une opération de séparation 204 des constituants du produit P ;
- une opération de détection 205 des constituants du produit P par les systèmes de détection 25 et 26.

De plus, la première étape analytique 10 comprend une opération de collecte 206 des constituants du produit P. En effet, après leur séparation dans une colonne préparative 24, les constituants du produit P sont passés chacun dans les séparateurs du système de collecte 27 pour être séparés du CO₂. Chaque constituant purifié peut être dilué ou non dans du modificateur S1,...,S6.

Chaque constituant purifié est séparé dans les séparateurs, suivi d'une étape de drainage des séparateurs par l'ouverture des vannes 30a et 30b. Le CO2 gazeux en sortie de séparateur est recyclé. La collecte vers le bras automatisé 5B se fait par la sélection de la vanne C2a. Dans l'exemple de réalisation, la vanne C2b, ici, peut être couplée à un second bras automatisé.

Le deuxième bras automatisé 5B se déplace dans le plan XY et descend vers le plateau de collecte 4B selon un axe Z2 pour déposer le constituant purifié dans un des tubes à essai. Il répète l'opération autant de fois qu'il y a de constituants purifiés collectés par le système de collecte 27.

Selon un autre mode de réalisation, le dispositif de prélèvement 5 est équipé d'un troisième bras automatisé mobile en translation selon un axe Z3 (non représenté) parallèle à l'axe Z2. Le troisième bras se déplace également dans le plan XY. Ainsi, le troisième bras automatisé est actionné en même temps que le deuxième bras automatisé 5B pour déposer le constituant purifié dans le plateau de collecte 4B. Cela permet d'accélérer l'opération de collecte de l'étape préparative 20. Le deuxième et le troisième bras automatisés peuvent fonctionner selon un procédé de collecte divulgué par le document FR3021229, auquel il est possible de se réferrer pour de plus amples informations.

Dans l'exemple illustré, l'étape préparative 20 comprend, après l'opération de collecte 206, lorsque la collecte n'est pas dirigé vers le bras 5B, une opération de recyclage 207 du fluide supercritique, ici du CO₂ peut avoir lieu. A noter que l'opération de recyclage 207 n'est réalisé que quand toutes les fractions du produit P sont collectés et que le fluide supercritique est isolé de l'environnement extérieur. Le fluide recyclé est alors réintroduit dans le circuit avant la première vanne d'aiguillage V1.

Dans un exemple de réalisation, de la même manière que la première étape analytique 10, l'étape préparative 20 comprend en outre une première opération de nettoyage 201 en amont de l'opération de premier et de deuxième pompages et une deuxième opération de nettoyage 208 placée à la fin de l'étape préparative 20.

À la suite de l'étape préparative 20, une deuxième étape d'aiguillage X2 est mise en place. Elle consiste à basculer la première vanne V1, la deuxième vanne V2 sur la voie analytique 1. Dans cet exemple et à la différence de la première étape d'aiguillage X1, la deuxième étape d'aiguillage X2 comprend
- une opération de contrôle 501 de la pureté des fractions du produit P à l'issue de l'étape préparative 20
- une opération de changement de voie 502.

Dans cet exemple, vient ensuite une deuxième étape analytique 30 illustrée à la figure 4 et à la figure 5. Pendant cette étape analytique 30, les mêmes opérations que la première étape analytique 10 sont réalisées sauf que le sujet d'analyse cette fois-ci est un ou plusieurs constituants purifiés du produit P. Plus précisément, les opérations suivantes sont effectuées :
- une première opération de nettoyage 301 du circuit d'injection 13A,
- une opération 302 de premier pompage du fluide supercritique CO₂ et de deuxième pompage d'un modificateur,
- une opération d'injection 303 d'un constituant purifié dans une des colonnes analytiques 14,
- une opération de séparation 304 du constituant purifié,
- une opération de détection 305 par les systèmes de détection 15 et 16 afin de déterminer la pureté du constituant purifié,
- une opération de recyclage 306 du fluide supercritique, alors à l'état gazeux ;
- une deuxième opération de nettoyage 307 du circuit d'injection 13A.

À noter que plusieurs constituants purifiés du produit P peuvent être analysés tour à tour pendant cette étape. Pour cela, les constituants purifiés sont injectés l'un après l'autre dans une colonne chromatographique 14.

Dans un exemple, le modificateur S1,...,S6 utilisé pour l'opération 302 du premier pompage et du deuxième pompage est le modificateur S1,...,S6 pour lequel on obtient les conditions d'analyse optimales. Ce modificateur est défini dans les étapes précédentes, en particulier lors de la première étape d'analyse 10.

Afin de mettre en oeuvre le procédé de chromatographie selon l'invention qui vient d'être décrit, l'installation 100 comprend un dispositif de contrôle informatique des différentes parties de l'installation. Le dispositif de contrôle comprend un système d'identification des paramètres ou un système PID à partir duquel les éléments de l'installation (les pompes, les vannes) peuvent être actionnés pour le changement entre la voie analytique et la voie préparative. Le dispositif de contrôle permet également à l'opérateur de suivre les conditions opératoires en temps réel durant le procédé.

Par ailleurs, le dispositif de contrôle commande les bras automatisés, le basculement des vannes d'aiguillage entre les deux voies ou le démarrage des systèmes de détection.

Le dispositif de contrôle est apte à recevoir une programmation du procédé selon l'invention. Il est capable de déterminer si le résultat d'une étape d'analyse, par exemple de l'étape analytique, est conforme aux valeurs référentielles prédéfinies ou quel est la meilleure condition d'analyse dans le cas où plusieurs modificateurs sont utilisés. Le dispositif de contrôle informatique permet ainsi de réaliser une succession d'étapes d'analyse analytique et préparative de manière automatique et dans une condition d'analyse optimale sans avoir besoin de l'intervention d'un opérateur.

Bien entendu, il est possible d'apporter à l'invention de nombreuses modifications sans pour autant sortir du cadre défini par les revendications. En particulier, le fluide supercritique peut être remplacé par un fluide de type liquide lors de la mise en oeuvre du procédé de chromatographie selon l'invention.

## Revendications

1. Procédé de chromatographie en phase supercritique ou liquide d'un produit P, ledit procédé comprenant en continu et dans l'ordre :
- une étape analytique (10, 30) selon une voie analytique (1) comprenant :
• une opération (102, 302) de premier pompage d'un fluide supercritique ou liquide et de deuxième pompage d'un modificateur,
• une opération d'injection (103, 303) d'au moins un échantillon du produit P ou d'au moins un constituant du produit P dans au moins une colonne de chromatographie, le produit P ou le constituant du produit P étant élué avec le fluide supercritique ou liquide et le modificateur,
• une opération de séparation (104, 304) des constituants du produit P,
• une opération de détection (105, 305) de la composition du produit P ou des constituants du produit P,
- une étape d'aiguillage (X1, X2) comprenant
• une opération de vérification (401) comportant une sous-étape de comparaison des résultats d'analyse entre eux ou avec des valeurs référentielles représentant des conditions d'analyse optimales, et
• une opération de changement de voie automatique (402, 502) entre la voie analytique (1) et une voie préparative (2) en fonction de la comparaison précédente,
- en cas de sélection de la voie préparative (2) à l'étape d'aiguillage, une étape préparative (20) selon la voie préparative (2) comprenant :
• une opération (202) de premier pompage d'un fluide supercritique ou liquide et de deuxième pompage d'un modificateur,
• une opération d'injection (203) d'au moins un échantillon du produit P dans au moins une colonne de chromatographie, le produit P étant élué dans la colonne de chromatographie par le fluide supercritique ou le liquide, et le modificateur,
• une opération de séparation (204) des constituants du produit P,
• une opération de détection (205) des constituants du produit P,
• une opération de collecte (206) d'un ou plusieurs constituants du produit P, en lit ouvert, à pression atmosphérique,
• une opération de recyclage (207) du fluide supercritique, ledit fluide étant isolé de l'environnement extérieur, par une vanne commutée une fois que l'opération de collecte (206) de l'étape préparative est terminée.

2. Procédé selon la revendication 1, **caractérisé en ce qu'**il comprend, en continu et dans l'ordre :
- une première étape analytique (10),
- une première étape d'aiguillage (X1),
- une étape préparative (20),
- une deuxième étape d'aiguillage (X2), et
- une deuxième étape analytique (30) comportant les mêmes opérations que la première étape analytique (10).

3. Procédé selon la revendication 2, **caractérisé en ce que** la deuxième étape d'aiguillage (X2) comprend :
- une opération de contrôle (501) de la pureté des fractions du produit P à l'issue de l'étape préparative (20),
- une opération de changement de voie automatique (502) entre la voie analytique (1) et une voie préparative (2) en fonction du contrôle précédent.

4. Procédé selon l'une des revendications 1 à 3, **caractérisé en ce que** l'étape analytique (10, 30) comprend une opération de recyclage (106, 306) faisant suite à l'opération de détection (105, 305) de l'étape analytique (10, 30).

5. Procédé selon l'une des revendications 1 à 4, **caractérisé en ce que** l'étape analytique (10, 30) et l'étape préparative (20) comprennent chacune
- une première opération de nettoyage (101, 201, 301) d'un circuit d'injection (13A, 23A) et de collecte en amont de l'opération (102, 202, 302) de premier pompage et de deuxième pompage, et
- une deuxième opération (107, 208, 307) de nettoyage du circuit d'injection (13A, 23A) et de collecte en aval de l'opération de collecte (206) de l'étape préparative (20) ou à l'opération de détection (105, 305) de l'étape analytique (10, 30).

6. Procédé selon l'une quelconque des revendications 1 à 5, **caractérisé en ce que** l'opération de détection (105, 205, 305) se fait par spectrophotométrie dans l'ultraviolet visible et/ou par spectrométrie de masse.

7. Procédé selon l'une quelconque des revendications 1 à 6, **caractérisé en ce que** le fluide supercritique est le dioxyde de carbone.

8. Installation (100) pour la chromatographie en phase supercritique ou liquide d'un produit P agencé de sorte à mettre en oeuvre le procédé selon l'une des revendications 1 à 6, comprenant une voie analytique (1) et une voie préparative (2) montées en parallèle, la voie analytique (1) et la voie préparative (2) comprenant chacune :
- une première pompe (11, 21) de fluide supercritique ou liquide,
- une deuxième pompe (12, 22) de modificateur,
- un système d'analyse (14, 24) comprenant au moins une colonne chromatographique,
- un système d'injection (13, 23) d'au moins un échantillon du produit P ou des constituants séparés du produit P dans les colonnes du système d'analyse (14, 24), le système d'injection (13, 23) étant disposé entre la première pompe (11, 21) du fluide supercritique ou liquide et le système d'analyse (14, 24),
l'installation comprenant un système de collecte (27) à lit ouvert, à pression atmosphérique de fractions du produit P et du fluide supercritique ou du liquide à recycler; et au moins un système de détection (15, 25 ; 16, 26),
l'installation comprenant aussi
- une première vanne d'aiguillage (V1) disposée en amont des systèmes d'injection (13, 23), qui est positionée de sorte à permettre une injection du produit P ou des constituants du produit P dans la voie analytique (1) ou dans la voie préparative (2),
- une deuxième vanne d'aiguillage (V2) disposée en amont des pompes (11, 21) de fluide supercritique ou liquide, qui est actionnée de façon à laisser circuler le fluide supercritique ou liquide dans la voie analytique (1) ou dans la voie préparative (2) au moyen d'un dispositif de prélèvement (5),
- un dispositif de contrôle informatique, la première vanne d'aiguillage (V1) et la deuxième vanne d'aiguillage (V2) étant activées au même moment par le dispositif de contrôle informatique de manière à diriger respectivement le produit P ou les constituants du produit P et le fluide supercritique ou liquide dans la voie issue de l'étape d'aiguillage (X1, X2),
- le système de collecte (27) étant relié d'une part à un système de recyclage (28) et d'autre part au dispositif de prélèvement (5), ledit système de collecte (27) comprennent des vannes (C1, C2) permettant d'envoyer le fluide supercritique, isolé de l'environnement extérieur, au système de recyclage (28) une fois que l'opération de collecte (206) de l'étape préparative est terminée.

9. Installation selon la revendication 8, **caractérisée par** un ensemble de plateaux (4, 4A, 4B) comportant des récipients et un dispositif de prélèvement (5) comprenant plusieurs bras automatisés (5A, 5B) qui sont configurés de manière à collecter ou déposer du produit P ou des fractions du produit P disposés dans l'ensemble de plateaux (4, 4A, 4B).

10. Installation selon l'une quelconque des revendications 8 à 9, **caractérisée** en ce le système de recyclage (28) de fluide supercritique est installé en aval du système de collecte (27).

11. Installation selon la revendication 10, **caractérisée en ce qu'**elle comprend un moyen d'aiguillage (V3) disposée en aval du système d'analyse (14, 24) destinée à mettre en série le système de détection (15, 16, 25, 26) avec la voie analytique (1) et la voie préparative (2).

12. Installation selon la revendication 11, **caractérisée en ce qu'**elle comporte un régulateur de débit (V4) installé après le moyen d'aiguillage.

13. Installation selon l'une des revendications 8 à 12, **caractérisée en ce que** le système de détection est composé de deux systèmes (15,16, 25, 26) de détection montés en parallèle, le premier système (15,25) étant un spectrophotomètre dans l'ultraviolet visible et le deuxième système (16, 26) étant un spectromètre de masse.

## Patentansprüche

1. Verfahren zur überkritischen Fluid- oder Flüssigkeitschromatographie eines Produkts P, wobei das Verfahren kontinuierlich und in dieser Reihenfolge umfasst:
- einen Analyseschritt (10, 30) gemäß einer Analyseroute (1), umfassend:
• einen Vorgang (102, 302) des ersten Pumpens eines superkritischen oder Flüssigen Fluids und des zweiten Pumpens eines Modifikators,
• einen Injektionsvorgang (103, 303) mindestens einer Probe des Produkts P oder mindestens eines Bestandteils des Produkts P in mindestens eine Chromatographiesäule, wobei das Produkt P oder der Bestandteil des Produkts P mit dem überkritischen oder Flüssigen Fluids und dem Modifikator eluiert wird,
• ein Verfahren zur Trennung (104, 304) der Bestandteile des Produkts P,
• eine Operation zum Nachweis (105, 305) der Zusammensetzung des Produkts P oder der Bestandteile des Produkts P,
- einen Schaltschritt (X1, X2), der Folgendes umfasst
• einen Verifizierungsvorgang (401), der einen Teilschritt des Vergleichs der Analyseergebnisse untereinander oder mit Referenzwerten, die optimale Analysebedingungen darstellen, umfasst, und
• einen Vorgang des automatischen Routenwechsels (402, 502) zwischen der analytischen Route (1) und einer präparativen Route (2) in Abhängigkeit von dem vorherigen Vergleich,
- wenn die präparative Route (2) im Umschaltschritt gewählt wird, einen präparativen Schritt (20) gemäß der präparativen Route (2), umfassend:
• einen Vorgang (202) des ersten Pumpens eines superkritischen oder Flüssigen Fluids und des zweiten Pumpens eines Modifikators,
• einen Injektionsvorgang (203) mindestens einer Probe des Produkts P in mindestens eine Chromatographiesäule, wobei das Produkt P in der Chromatographiesäule durch das überkritische oder die Flüssige Fluid und den Modifikator eluiert wird,
• einen Trennvorgang (204) der Bestandteile des Produkts P,
• einen Vorgang zur Erfassung (205) der Bestandteile des Produkts P,
• einen Sammelvorgang (206) von einem oder mehreren Bestandteilen des Produkts P in einem offenen Bett bei atmosphärischem Druck,
• einen Rückführungsvorgang (207) des überkritischen Fluids, wobei das Fluid von der äußeren Umgebung isoliert ist, durch ein geschaltetes Ventil, sobald der Sammelvorgang (206) des Vorbereitungsschritts abgeschlossen ist.

2. Verfahren nach Anspruch 1, **dadurch gekennzeichnet, dass** es kontinuierlich und in dieser Reihenfolge umfasst:
- einen ersten analytischen Schritt (10),
- einen ersten Schaltschritt (X1),
- einen vorbereitenden Schritt (20),
- einen zweiten Schaltschritt (X2), und
- eine zweite analytischen Schritt (30), die die gleichen Vorgänge wie die erste analytischen Schritt (10) umfasst.

3. Verfahren nach Anspruch 2, **dadurch gekennzeichnet, dass** der zweite Schaltschritt (X2) umfasst:
- einen Vorgang zur Überprüfung (501) der Reinheit der Fraktionen des Produkts P am Ende des Präparationsschritts (20),
- einen Vorgang des automatischen Routenwechsels (502) zwischen der analytischen Route (1) und einer präparativen Route (2) in Abhängigkeit von der vorhergehenden Prüfung.

4. Verfahren nach einem der Ansprüche 1 bis 3, **dadurch gekennzeichnet, dass** der Analyseschritt (10, 30) einen Rückführungsvorgang (106, 306) im Anschluss an den Nachweisvorgang (105, 305) des Analyseschritts (10, 30) umfasst.

5. Verfahren nach einem der Ansprüche 1 bis 4, **dadurch gekennzeichnet, dass** der analytische Schritt (10, 30) und der präparative Schritt (20) jeweils umfassen
- einen ersten Reinigungsvorgang (101, 201, 301) eines Einspritz- (13A, 23A) und Sammelkreislaufs stromaufwärts des ersten Pumpvorgangs und des zweiten Pumpvorgangs (102, 202, 302), und
- eine zweite Operation (107, 208, 307) zum Reinigen des Injektionskreislaufs (13A, 23A) und zum Sammeln stromabwärts der Sammeloperation (206) des Präparationsschritts (20) oder bei der Detektionsoperation (105, 305) des Analyseschritts (10, 30).

6. Verfahren nach einem der Ansprüche 1 bis 5, **dadurch gekennzeichnet, dass** der Nachweis (105, 205, 305) durch ultraviolettsichtbare Spektrophotometrie und/oder Massenspektrometrie erfolgt.

7. Verfahren nach einem der Ansprüche 1 bis 6, **dadurch gekennzeichnet, dass** das überkritische Fluid Kohlendioxid ist.

8. Anlage (100) für die überkritische Phase oder Flüssigchromatographie eines Produkts P, die zur Durchführung des Verfahrens nach einem der Ansprüche 1 bis 6 eingerichtet ist, umfassend einen analytischen Weg (1) und einen präparativen Weg (2), die parallel installiert sind, wobei der analytische Weg (1) und der präparative Weg (2) jeweils umfassen:
- eine erste Pumpe (11, 21) für superkritisches oder Flüssiges Fluid,
- eine zweite Pumpe (12, 22) mit Modifikator,
- ein Analysesystem (14, 24) mit mindestens einer chromatographischen Säule,
- ein Injektionssystem (13, 23) zum Injizieren mindestens einer Probe des Produkts P oder der abgetrennten Bestandteile des Produkts P in die Säulen des Analysesystems (14, 24), wobei das Injektionssystem (13, 23) zwischen der ersten Pumpe (11, 21) des überkritischen oder der Flüssiges Fluids und dem Analysesystem (14, 24) angeordnet ist, die Anlage umfasst ein offenes Sammelsystem (27) bei Atmosphärendruck von Fraktionen des Produkts P und zu recycelnde des überkritischen Fluids oder der Flüssigkeit; und mindestens ein Detektionssystem (15, 25; 16, 26),
Die Anlage umfasst außerdem
- ein erstes Schaltventil (V1), das stromaufwärts der Injektionssysteme (13, 23) angeordnet ist und das so positioniert ist, dass es die Injektion des Produkts P oder von Bestandteilen des Produkts P in die analytische Route (1) oder in die präparative Route (2) ermöglicht,
- ein zweites Schaltventil (V2) stromaufwärts der Pumpen (11, 21) für überkritisches Fluid oder Flüssigkeit, das betätigt wird, um überkritisches oder flüssiges Fluid mittels einer Probenahmevorrichtung (5) in der Analysestrecke (1) oder Präparationsstrecke (2) zirkulieren zu lassen,
- ein Computer-Steuergerät,
das erste Schaltventil (V1) und das zweite Schaltventil (V2) gleichzeitig von der Computersteuerungsvorrichtung aktiviert werden, um das Produkt P oder die Bestandteile des Produkts P und die überkritische oder die flüssige Flüssigkeit in den aus dem Schaltschritt (X1, X2) resultierenden Weg zu leiten,
- das Sammelsystem (27) einerseits mit einem Recyclingsystem (28) und andererseits mit der Probenahmevorrichtung (5) verbunden ist, wobei das Sammelsystem (27) Ventile (C1, C2) umfasst, die es ermöglichen, das überkritische Fluid, isoliert von der äußeren Umgebung, dem Recyclingsystem (28) zuzuführen, sobald der Sammelvorgang (206) des Vorbereitungsschritts abgeschlossen ist.

9. Anlage nach Anspruch 8, **gekennzeichnet durch** einen Satz von Platten (4, 4A, 4B), die Empfänger und eine Probenahmevorrichtung (5) umfassen, die mehrere automatisierte Arme (5A, 5B) umfasst, die so konfiguriert sind, dass sie das Produkt P oder die Produkt-P-Fraktionen, die in dem Satz von Platten (4, 4A, 4B) angeordnet sind, sammeln oder abgeben.

10. Anlage nach einem der Ansprüche 8 bis 9, **dadurch gekennzeichnet, dass** das System zur Rückführung des überkritischen Fluids (28) stromabwärts des Sammelsystems (27) installiert ist.

11. Anlage nach Anspruch 10, **dadurch gekennzeichnet, dass** sie ein dem Analysesystem (14, 24) nachgeschaltetes Umschaltmittel (V3) umfasst, das dazu bestimmt ist, das Detektionssystem (15, 16, 25, 26) in Reihe mit dem analytischen Weg (1) und dem präparativen Weg (2) zu schalten.

12. Anlage nach Anspruch 11, **dadurch gekennzeichnet, dass** sie einen Durchflussregler (V4) umfasst, der hinter den Schaltmitteln installiert ist.

13. Anlage nach einem der Ansprüche 8 bis 12, **dadurch gekennzeichnet, dass** das Detektionssystem aus zwei parallel geschalteten Detektionssystemen (15, 16, 25, 26) besteht, wobei das erste System (15, 25) ein ultraviolett-sichtbares Spektrophotometer und das zweite System (16, 26) ein Massenspektrometer ist.

## Claims

1. A method of supercritical fluide or liquid chromatography of a product P, said method comprising continuously and in this order:
- an analytical step (10, 30) according to an analytical route (1) comprising :
• an operation (102, 302) of first pumping of a supercritical fluid or liquid and second pumping a modifier,
• an injection operation (103, 303) of at least one sample of product P or at least one constituent of product P into at least one chromatography column, the product P or the constituent of product P being eluted with the supercritical fluid or liquid and the modifier,
• an operation for separation (104, 304) of the constituents of product P,
• an operation for detection (105, 305) of the composition of product P or the constituents of product P,
- a switching step (X1, X2) comprising
• a verification operation (401) comprising a sub-step of comparing the analysis results with each other or with reference values representing optimal analysis conditions, and
• an operation of automatic route changing (402, 502) between the analytical route (1) and a preparative route (2) depending on the previous comparison,
- if the preparative route (2) is selected in the switching step, a preparative step (20) according to the preparative route (2) comprising:
• an operation (202) of first pumping of a supercritical fluid or liquid and second pumping of a modifier,
• an injection operation (203) of at least one sample of product P into at least one chromatography column, the product P being eluted in the chromatography column by the supercritical fluid or liquid, and the modifier,
• a separation operation (204) of the constituents of product P,
• a detection operation (205) of the constituents of product P,
• a collection operation (206) of one or more constituents of product P, in an open bed, at atmospheric pressure,
• a recycling operation (207) of the supercritical fluid, said fluid being isolated from the external environment, by a switched valve once the collection operation (206) of the preparative step has been completed.

2. Method according to claim 1, **characterized in that** it comprises, continuously and in this order:
- a first analytical step (10),
- a first switching step (X1),
- a preparative step (20),
- a second switching step (X2), and
- a second analytical stage (30) comprising the same operations as the first analytical step (10).

3. Method according to claim 2, **characterized in that** the second switching step (X2) comprises :
- an operation of checking (501) the purity of the fractions of product P at the end of the preparative step (20),
- an operation of automatic route changing (502) between the analytical route (1) and a preparative route (2) as a function of the preceding check.

4. Method according to one of claims 1 to 3, **characterized in that** the analytical step (10, 30) comprises an operation of recycling (106, 306) following the detection operation (105, 305) of the analytical step (10, 30).

5. Method according to one of claims 1 to 4, **characterized in that** the analytical step (10, 30) and the preparative step (20) each comprise
- a first cleaning operation (101, 201, 301) of an injection (13A, 23A) and collection circuit upstream of the first pumping and second pumping operations (102, 202, 302), and
- a second operation (107, 208, 307) for cleaning the injection circuit (13A, 23A) and collection downstream of the collection operation (206) of the preparative step (20) or at the detection operation (105, 305) of the analytical step (10, 30).

6. Method according to any one of claims 1 to 5, **characterized in that** the detection operation (105, 205, 305) is performed by ultraviolet-visible spectrophotometry and/or mass spectrometry.

7. Method according to any one of claims 1 to 6, **characterized in that** the supercritical fluid is carbon dioxide.

8. Installation (100) for supercritical phase or liquid chromatography of a product P arranged to carry out the method according to one of claims 1 to 6, comprising an analytical route (1) and a preparative route (2) installed in parallel, the analytical pathway (1) and the preparative route (2) each comprising :
- a first pump (11, 21) of supercritical fluid or liquid,
- a second pump (12, 22) of modifier,
- an analysis system (14, 24) comprising at least one chromatographic column,
- an injection system (13, 23) for injecting at least one sample of the product P or of the separated constituents of the product P into the columns of the analysis system (14, 24), the injection system (13, 23) being arranged between the first pump (11, 21) of the supercritical fluid or liquid and the analysis system (14, 24),
the installation comprising an open-bed collection system (27), at atmospheric pressure of fractions of product P and supercritical fluid or liquid to be recycled; and at least one detection system (15, 25; 16, 26),
the installation also comprising
- a first switching valve (V1) located upstream of the injection systems (13, 23), which is positioned so as to allow injection of product P or constituents of product P into the analytical route (1) or into the preparative route (2),
- a second switching valve (V2) upstream of the pumps (11, 21) of supercritical fluid or liquid, which is operated to allow supercritical or liquid fluid to circulate in the analytical route (1) or preparative route (2) by means of a sampling device (5),
- a computer control device,
the first switching valve (V1) and the second switching valve (V2) are activated at the same time by the computer control device so as to direct the product P or the constituents of the product P and the supercritical fluid or liquid respectively into the route resulting from the switching step (X1, X2),
- the collection system (27) being connected, on the one hand, to a recycling system (28) and, on the other hand, to the sampling device (5), said collection system (27) comprising valves (C1, C2) allowing to to send the supercritical fluid, isolated from the external environment, to the recycling system (28) once the collection operation (206) of the preparative step has been completed .

9. Installation according to claim 8, **characterized by** a set of plates (4, 4A, 4B) comprising recipients and a sampling device (5) comprising a plurality of automated arms (5A, 5B) which are configured so as to collect or deposit product P or product P fractions arranged in the set of plates (4, 4A, 4B).

10. Installation according to any one of claims 8 to 9, **characterized in that** the supercritical fluid recycling system (28) is installed downstream of the collection system (27).

11. Installation as claimed in claim 10, **characterized in that** it comprises a switching means (V3) arranged downstream of the analysis system (14, 24) intended to put the detection system (15, 16, 25, 26) in series with the analytical route (1) and the preparative route (2).

12. Installation according to claim 11, **characterized in that** it comprises a flow regulator (V4) installed after the switching means.

13. Installation according to one of claims 8 to 12, **characterized in that** the detection system is made up two detection systems (15, 16, 25, 26) connected in parallel, the first system (15, 25) being a ultraviolet-visible spectrophotometer and the second system (16, 26) being a mass spectrometer.
